# EUROPEAN PATENT SPECIFICATION

(11) **EP 0 669 735 B1**
(45) Date of publication and mention of the grant of the patent: **24.10.2001**
(21) Application number: 95850023.3
(22) Date of filing: 26.01.1995
(51) Int. Cl.: H04L 12/28

(54) **Method and arrangement for a LAN according to the DECT standard**
Verfahren und Anordnung für ein LAN entsprechend dem DECT-Standard
Méthode et dispositif pour un réseau local selon la norme DECT

(30) Priority: 17.02.1994 SE 9400535
(43) Date of publication of application: 30.08.1995
(73) Proprietor: TELIA AB, 123 86 Farsta (SE)
(72) Inventor: Björk, Christer, SE-230 30 Oxie (SE)
(74) Representative: Akerman, Marten Lennart

(56) References cited:
- WO-A-93/07684
- INTERNATIONAL CONFERENCE ON COMMUNICATIONS, vol.1, 4 June 1978, TORONTO, CA pages 7.2.1 - 7.2.5 L.KLEINROCK ET AL 'AN OPTIMAL ADAPTIVE SCHEME FOR MULTIPLE ACCESS BROADCAST COMMUNICATION'
- IEEE COMMUNICATIONS MAGAZINE., vol.30, no.12, December 1992, US pages 42 - 53, XP330089 H.W.TUTTLEBEE 'CORDLESS PERSONAL COMMUNICATIONS'

## Description

### TECHNICAL BACKGROUND

The present invention concerns a method for a LAN (Local Area Network) which works according to DECT (Digital European Cordless Telecommunications), ATM (Asynchronous Transmission Mode), or a similar system and contains a number of nodes or the like, from, to, and between which data traffic is established by means of a variable set of time slots with time gaps for respective radio channels for the respective nodes involved. The invention also concerns an arrangement for implementing said method.

### STATE OF THE ART

A wireless LAN with central unit is already known by patent application WO 93/7684. The network is designed to work in accordance with the DECT standard. The document describes a system in which a number of data terminals can send and receive data packets via the central unit. Communication can occur between the various data terminals, or to and from a stationary external network (e.g., an Ethernet, Token Ring or RS 232 network). According to the document, the terminals perform statistical computations pertaining to the workload of the terminal. When data is being transferred, a connection is established and maintained for as long as needed, after which the connection is broken after a time depending on the computed average traffic. According to the document, the capacity (bandwidth) can be adaptively apportioned to the various terminals as needed.

From American patent US-A-5195090 there is a known architecture for a wireless communication system in which the connection to the LAN-based network occurs by means of a packet-switching. Between the LAN-based network and the wireless network (which can be a cellular radio telephone system) there are units which package and unpackage information to and from the wireless system. According to the document, packet-switched and circuit-switched radio traffic can be handled side by side.

From American patent US-A-5200956 there is a known digital wireless telephone system, consisting of primary and secondary stations. The system is capable of relaying both voice and data. When it is desired to relay voice, a duplex channel is connected. In order to transmit data with high transmission capacity, a number of voice channels are borrowed and then returned after the data transmission. These voice channels are quickly accessible, since the secondary stations contain lists of the usable channels.

From american patent 4761781 there is a known method and system for relaying of packet-switched traffic along with a circuit-switched traffic, involving optimization of the utilization of the available bandwidth. However, the document concerns hard-wired systems.

The document International Conference on Communications, vol. 1, 4 June 1978, Toronto, CA pages 7.2.1 - 7.2.5 L. Kleinrock et al. "An optimal adaptive scheme for multiple access broadcast communication" is considered to represent the most relevant state of the art, and forms the basis for the preambles of the independent claims 1 and 8.

The document discloses an access method in a radio-based LAN system comprising a number of nodes from, to and between which data traffic is established by means of a set of time-slots for the respective nodes involved, wherein the probability of only one node being connected to a time slot, i.e., such that collision with other nodes are avoided, is determined by means of an urn scheme.

The method includes the following steps:
estimating the total number of nodes N,
estimating the number of nodes n which have something to transmit,
and randomly creating a subset of said nodes which is permitted to send, the size k of said subset being estimated as k = integer N/n.

### DESCRIPTION OF THE INVENTION

### THE TECHNICAL PURPOSE

The present purpose is to allow the utilization of the DECT standard to implement a radio-based LAN. However, it is by no means easy to accomplish this. If one considers the transmission capacity which DECT can theoretically offer, this capacity is quite suitable for most LAN applications. With the 240 available time gaps, which are estimated to provide 25.6 kbit/s effective data rate, one obtains a cumulative effective data rate of more than 6 Mbit/s. This transmission capacity is entirely on a par with cable-based LAN of type Ethernet and Token Ring.

One should also inquire whether the architecture for DECT places any major restrictions on the implementation of a DECT-based LAN. The protocol architecture for DECT consists of the three OSI layers: the physical layer (PHY), the link layer, divided into a MAC (Medium Access Control) and DLC (Data Link Control), and the network level (NWK). But the DECT specification states that not all OSI layers have to be implemented. In fact, it is enough to have equipment according to the DECT specification for the physical layer (PHY) and a limited portion of the MAC layer in order to call the equipment DECT and thus make use of divided frequency bands. The portions of the MAC layer which have to be implemented are portions of the control information field, the check sum of the latter, and the channel selection procedure. In other words, the protocol architecture for DECT gives the manufacturer great flexibility in implementing a DECT-based LAN.

The properties which a LAN will have are largely dependent on the MAC protocol used, and here a manufacturer of a DECT-based LAN is confronted by a first choice in the solving of the problem. The manufacturer can either choose to utilize the services defined on the MAC level in DECT according to the specification for the MAC level and/or dispense with or supplement these services within the bounds of what the standard allows. If the manufacturer chooses to utilize the services which are defined on the MAC level in DECT, it is possible to send both packet-oriented and circuit-switched traffic. In the packet-oriented transmission mode, however, the sending is limited to only one time gap, which limits the effective data rate to 25.6 kbit/s. In order to achieve the high effective data rates required in connection with LAN, one must employ the circuit-switched transmission mode. This is one of the problems solved by the invention.

Another problem is that a DECT-based LAN provides data traffic in the LAN environment in bursts, so-called asynchronous data traffic, and is not comprised of a periodic data flow, such as telephony and video, i.e., the applications for which the architecture of the DECT standard was originally designed. In assessing the effective data rate which a DECT-based LAN can offer in asynchronous communication, one must therefore notice how the architecture is adapted to this type of data traffic in other respects.

In asynchronous communication, one normally uses a packet-oriented network. This means that a data packet can theoretically be sent at any time, without previous reservation of the bandwidth. For synchronous data traffic, on the other hand, a circuit-switched transmission method is used, with reservation of bandwidth. The standards available for cable-based LAN, such as Ethernet and Token Ring, specify packet-oriented networks adapted to handle only asynchronous data traffic.

In DECT, it is possible to send both packet-oriented and circuit-switched traffic. In the packet-oriented transmission mode, however, the transmission can be limited to only one time slot, which restricts the effective data speed to 25.6 kbit/s. In order to achieve the high effective data rates as are required in connection with LAN, one must use the circuit-switched transmission method.

In the circuit-switched transmission mode of DECT, one requires 2 data packets to request a connection and one data packet to disconnect. Since the frame time in DECT is 10 ms, this means that at least 30 ms must be added to the time required to send a transmission. If each data packet to be sent from, e.g., one node to a so-called server has to be surrounded by a setup and clearing, this time consumption signifies a radical worsening of the effective data rate.

For example, assume that a data packet containing 600 bytes is to be sent from one node to a server and 6 time slots are used. The time it takes to transmit 4800 bits is then 31.25 ms plus the 30 ms required for the setup and clearing of the connection. The actual effective data rate in this case is a good 78 kbit/s or approximately 13 kbit/s per time slot, which corresponds to half the theoretical effective data rate. Using a larger number of timeslots to increase the effective data rate makes the problem even more clear. If the number of time slots is doubled, the transmission time is reduced by half, but since the setup time is constant the result is just 9 kbit/s of effective data rate per time slot.

One option for avoiding this problem, of course, is not to clear the connection after each data packet. The disadvantage with this method, however, is that valuable bandwidth is lost when data packets are not being sent, since the communication medium is still reserved. This, in turn, limits the number of nodes which can be serviced.

There are also problems in deciding, from the above-presented analysis, whether it makes sense to consider taking the other avenue, i.e., dispensing with or supplementing the services which are defined on the MAC level in DECT and implementing instead one's own MAC protocol within the acceptable framework of the standard. One should therefore decide whether this is a better course to follow in implementing a DECT-based LAN. The present invention solves the problem by specifying a MAC protocol suitable for implementation in a DECT-based LAN.

Within the framework of the DECT standard, it is required to implement a MAC protocol which makes optimal use in asynchronous communication of the available bandwidth and provides an effective rate, i.e., taking into account any necessary setup and clearing times, on a par with what is theoretically achievable.

Thus, there are sophisticated technical problems to be solved in this connection. One question here is how one can realize within the framework of the DECT standard a radio-based LAN which utilizes the available bandwidth in an optimal way during asynchronous communication and provides an effective working data rate on a par with what is theoretically achievable. The invention proposes to solve this problem.

Furthermore, in certain connections there is a need to implement something which allows a combined asynchronous and synchronous communication.

### THE SOLUTION

According to the idea of the invention, the so-called "urn protocol" is to be used. The intention of this protocol is to improve the performance under high traffic loads in Slotted Aloha. Slotted Aloha is a MAC (Medium Access Control) protocol for asynchronous communication based on the principle that transmission of data packets always occurs in time slots of fixed length. In Slotted Aloha there are no rules for avoiding collisions, but rather nodes which wish to send do so in the next available time slot. If a collision should occur, the time slot is lost and the colliding nodes must try again in a later opportunity.

The advantage of Slotted Aloha is its simplicity, and the fact that access to the channel can occur very quickly during low workload, which provides short response times. But when the workload is increased, there is a higher number of collisions and the protocol does not work as well. The theoretical limit for the maximum traffic flow in Slotted Aloha is around 37%.

With the urn protocol, one obtains a very attractive behavior in both low and high workloads. During low workloads, the protocol resembles Slotted Aloha, but during high workloads the protocol comes to resemble traditional TDMA. The advantage with the urn protocol in its application in DECT-based LAN is the fact that DECT already has a division into fixed time slots according to the principles of Slotted Aloha. This makes it impossible or meaningless to implement access methods like CSMA, CONB, ETC, in this connection.

What can be considered to be the primary characteristic of the method and arrangement according to the invention is that the nodes, which wish to communicate asynchronously, request connection to a base station by requesting a circuit-switched link via the services defined on the MAC level in DECT, the base station assigning each node wishing to communicate asynchronously the time slots corresponding to the common radio channel, and the negotiation as to which time slots can be used occurring between the nodes and the base station, and in that the nodes which wish to communicate synchronously request connection to a base station by requesting a circuit-switched link via the services defined on the MAC level in DECT, but indicate that the requested time slots are for private use.

The urn protocol in question behaves like traditional TDMA under high workloads. Urns of preferably the same size and same content are established at all nodes. Moreover, the arrangement works with the same or similar rules for production of the parameters n and N. The random generator used at the particular node employs the same or corresponding embryo/origins as the random generators of the other nodes in connection with the determination of the urn's content.

In one arrangement according to the invention, the system is organized to negotiate a common number of time slots for the particular application at the nodes involved in the DECT-based LAN and the choice of the common number of time slots follows the channel selection procedure of DECT and is dynamically adapted to the traffic situation for both its own traffic and surrounding traffic. The selected number of time slots forms the common radio channel for incoming nodes. The access function to the common radio channels shall follow the rules of the urn protocol, as discussed above.

### DRAWINGS

One embodiment of an arrangement for the present proposal which illustrates the significant characteristics of the invention shall be described hereafter, making reference to the enclosed drawings:
Figure 1 shows in diagram form the performance of the urn protocol under various traffic loads in the current telecommunication network,
Figure 2 shows, likewise in diagram form, examples of the common radio channel, in which the dark boxes show a common radio channel, and
Figure 3 shows parts of a LAN.

### DETAILED EMBODIMENTS

The basic idea of the urn protocol is to try to optimize the probability that only one node sends in the next time slot, i.e., no collision occurs. This can be done by estimating the number of nodes n which have something to send during time slot t, and the total number of nodes (N), and then randomly creating a subset of nodes which are permitted to send in time slot t+1. Only nodes which have something to send will then send in time slot t+1. It is to be shown mathematically that the probability of only one node sending in time slot t+1 is optimized if the size of the subset is k (N/n is rounded off to the next higher number). The subset is hereafter called the urn, from which the access method takes its name.

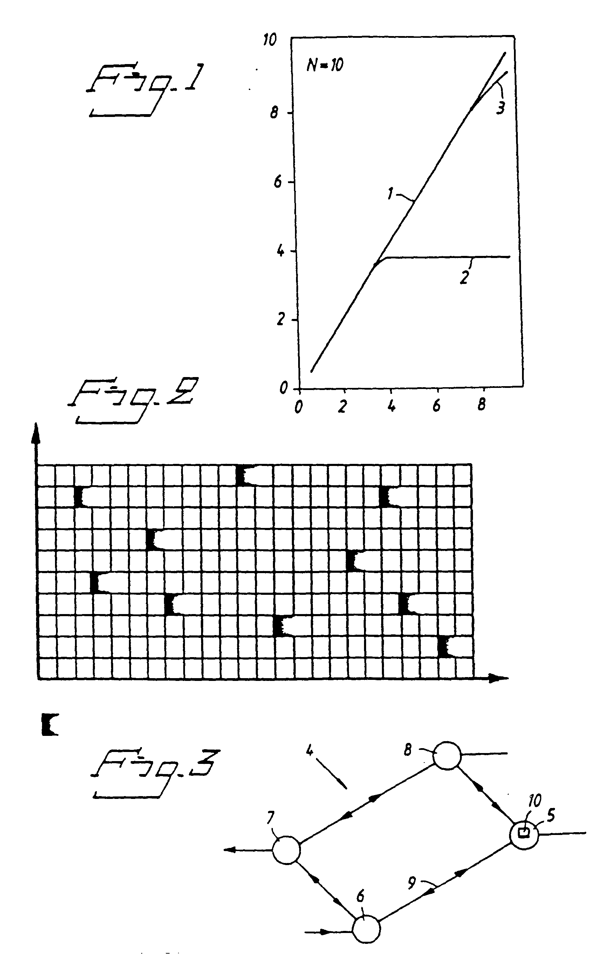

It is easy to see that the urn protocol behaves like the traditional TDMA during high load. If all the nodes have something to send during time slot t, i.e., k=1, only one node will be permitted to send during time slot t+1. This extreme case corresponds precisely to the TDMA principles. In the urn protocol, it is important that all nodes create urns of the same size and with the same contents. One way of accomplishing this is to use the same rules for determining the parameters n and N and to employ identical seeds in each node's random number generator when the urn's content is determined. Within the DECT standard, it should be possible to construct an asynchronous MAC protocol in a DECT-based LAN as follows. The component nodes in a DECT-based LAN negotiate a common number of time slots to use, see figure 2. The choice of the common number of time slots follows the channel selection procedures of DECT and can be dynamically adapted to the traffic situation for both one's own traffic and surrounding traffic. The selected number of time slots forms the common radio channel for the constituent nodes. Access to the common channel then occurs according to the rules of the urn protocol.

The invention according to the above also operates in the case when the DECT standard quite generally and in itself allows several time slots to address the same receiver in parallel and/or in series. The structure of the DECT can also deal with collisions between different users. A certain additional control of the DECT operating mode can also be conceivable and the DECT structure and channel selection algorithms can also be used. The term "node" in the above shall be taken in its broadest meaning, cf. FP (Fixed Parts) and RFP (Radio Fixed Parts). The channel selection in DECT is done by PP (Portable Parts).

In figure 1 we observe curves 1, 2 and 3, where curve 1 concerns a perfect behavior, curve 2 is the function for optimal Aloha and curve 3 for the urn protocol (TDMA). This scheme applies for N=10. As for figure 2, refer to the above remarks. In figure 3, a LAN is symbolized by 4. The network 4 contains nodes 5, 6, 7 and 8, to, from, and between which data traffic 9 is effected. The particular nodes contain a random number generator 10 which functions per above.

The invention can be implemented both centralized and distributed. One way of implementing the invention in DECT-based LAN with centralized system architecture that is very suitable for combined synchronous and asynchronous communication is as follows. The nodes in a DECT-based LAN which wish to communicate asynchronously request connection to a base station RFP by requesting a circuit-switched link via the services which are defined on the MAC level in DECT. The base station apportions to each node which wishes to communicate asynchronously the time slots which correspond to the common radio channel. In order not to conflict with the channel selection procedures in DECT, the negotiation as to which time slots shall be used may occur between nodes and base station. After this, access to the common channel occurs by the urn protocol.

The base station is responsible for time synchronization of the nodes and for distribution of the common nuclei required so that the random number generators at the nodes can generate identical random numbers. The base station is also responsible for information as to the number of nodes utilizing the common radio channel, i.e., distribution of the parameter n. Information on the random number nuclei and the number of nodes can be distributed via the so-called beacon packet. As an alternative, the base station can also be responsible for the distribution of the ratio N/n. Nodes in a DECT-based LAN which wish to communicate synchronously request connection to the base station in similar fashion, but note that the requested time slots are for private use. The invention gives a DECT-based LAN the following advantages as compared to systems which only utilize the services defined on the MAC level in DECT according to the specification for the MAC level. The system is packet-oriented and not circuit-switched, i.e., access to the channel can occur very quickly under low and medium workload. There are no setup times on the order of 30 ms. The algorithm is adaptive, i.e., as the workload increases the system begins to behave like a traditional TDMA system. The frequency spectrum is utilized/reserved only when communication is happening. Combined asynchronous and synchronous communication can be easily implemented. The invention can be implemented both centralized and distributed.

The invention is not limited to the embodiment given above as an example, but is subject to modifications within the bounds of the following claims.

## Claims

1. An access method in a radio-based LAN system comprising a number of nodes (5, 6, 7, 8) from, to and between which data traffic is established by means of a set of time-slots for the respective nodes involved wherein the probability of only one node being connected to a time slot, i.e., such that collision with other nodes are avoided, is determined by means of an urn scheme, and wherein the LAN system is based on the DECT standard, and the access method is implemented on the MAC level and includes the following steps:
- the nodes (5, 6, 7, 8) negotiating a common set of time slots to use for forming a common radio channel;
- estimating the total number of nodes N;
- estimating the number of nodes n which have something to send at the time t;
- randomly creating a subset of said nodes which is permitted to send during a time slot t + 1, the size k of said subset being estimated as k = N/n rounded off to the next higher integer, **characterised in that** the nodes which wish to communicate asynchronously request connection to a base station by requesting a circuit-switched link via the services defined on the MAC level in DECT, the base station assigning each node wishing to communicate asynchronously the time slots corresponding to the common radio channel, and the negotiation as to which time slots can be used occurring between the nodes and the base station, and **in that** the nodes which wish to communicate synchronously request connection to the base station by requesting a circuit-switched link via the services defined on the MAC level in DECT, but indicate that the requested time slots are for private use.

2. An access method according to claim 1, **characterised in that** subsets are created at all nodes, which subsets all have the same size and the same content.

3. An access method according to claim 2, **characterised in that** the subsets are created by means of random generators (10) at the respective nodes (5, 6, 7, 8) employing the same or corresponding origins (nuclei) as the random generators of the other nodes in determining the contents of the subset.

4. An access method according to any one of the preceding claims, **characterised in that** the choice of the common set of time slots follows the channel selection procedure of DECT and is dynamically adapted according to the traffic situation of both one's own traffic and the surrounding traffic.

5. An access method according to claim 3, **characterised in that** the base station distributes information about common nuclei/origins which are necessary for the random generators and about the parameter N or the ratio N/n.

6. An access method according to claim 5, **characterised in that** the base station distributes the information via a beacon packet.

7. An access method according to any one of the preceding claims, **characterised in that** the system is packet-oriented **in that** the frequency spectrum is usable/reserved only when communication is occurring.

8. A radio-based LAN system comprising a number of nodes (5, 6, 7, 8) from, to and between which data traffic is established by means of a set of time-slots for the respective nodes involved wherein the probability of only one node being connected to a time slot, i.e., such that collision with other nodes are avoided, is determined by means of an urn scheme, wherein the LAN system is based on the DECT standard and comprising:
means for estimating the total number of nodes N;
means for estimating the number of nodes n which have something to send at the time t; and
means for randomly creating a subset of said nodes which is permitted to send during a time slot t + 1, the size k of said subset being estimated as k = N/n rounded off to the next higher integer, the nodes (5, 6, 7, 8) being adapted to negotiate a common set of time slots to use for forming a common radio channel, **characterised in that** the nodes which wish to communicate asynchronously are adapted to request connection to a base station by requesting a circuit-switched link via the services defined on the MAC level in DECT, the base station being adapted to assign each node wishing to communicate asynchronously the time slots corresponding to the common radio channel, and the negotiation as to which time slots can be used occurring between the nodes and the base station, and **in that** the nodes which wish to communicate synchronously are adapted to request connection to the base station by requesting a circuit-switched link via the services defined on the MAC level in DECT, but indicate that the requested time slots are for private use.

9. A LAN system according to claim 8, **characterised in that** subsets are created at all nodes, which subsets all have the same size and the same content.

10. A LAN system according to claim 9, **characterised in that** the respective nodes (5, 6, 7, 8) include random generators (10) creating the subsets and employing the same or corresponding origins (nuclei) as the random generators of the other nodes in determining the contents of the subset.

11. A LAN system according to any one of claims 8 to 10, **characterised in that** the choice of the common set of time slots follows the channel selection procedure of DECT and is dynamically adapted according to the traffic situation of both one's own traffic and the surrounding traffic.

12. A LAN system according to claim 10, **characterised in that** the base station is adapted to distribute information about common nuclei/origins which are necessary for the random generators and about the parameter N or the ratio N/n.

13. A LAN system according to claim 12, **characterised in that** the base station is adapted to distribute the information via a beacon packet.

14. A LAN system according to any one of claims 8 to 13, **characterised in that** the system is packet-oriented **in that** the frequency spectrum is usable/reserved only when communication is occurring.

## Patentansprüche

1. Zugriffsverfahren in einem funkgestützten LAN-System mit einer Anzahl von Knoten (5, 6, 7, 8), von, zu und zwischen denen Datenverkehr durchgeführt wird mittels eines Satzes von Zeitschlitzen für die jeweils beteiligten Knoten, wobei die Wahrscheinlichkeit dafür, daß immer nur ein Knoten mit einem Zeitschlitz verbunden ist, d.h. daß Kollisionen mit anderen Knoten vermieden werden, mittels eines Urnenschemas bestimmt wird, und wobei das LAN-System auf der DECT-Norm beruht, und das Zugriffsverfahren auf der MAC-Ebene durchgeführt wird und die folgenden Schritte umfaßt:
- die Knoten (5, 6, 7, 8) handeln einen gemeinsamen Satz von Zeitschlitzen aus, der zur Bildung eines gemeinsamen Funkkanals dient;
- Abschätzung der Gesamtzahl von Knoten N;
- Abschätzung der Anzahl von Knoten n, die zum Zeitpunkt t etwas zu versenden haben;
- zufälliges Erstellen einer Untergruppe von Knoten, die während eines Zeitschlitzes t+1 die Erlaubnis zum Senden haben, wobei die Größe k der Untergruppe geschätzt wird als k = N/n mit Aufrundung zur nächsthöheren ganzen Zahl,
**dadurch gekennzeichnet, daß** die Knoten, die asynchron kommunizieren wollen, eine Verbindung zu einer Basisstation anfragen durch Anfordern eines Schaltungs-geschalteten Links über die auf der MAC-Ebene in DECT-definierten Dienste, wobei die Basisstation jedem Knoten, der asychron kommunizieren will, die dem gemeinsamen Radiokanal entsprechenden Zeitschlitze zuweist, wobei das Aushandeln, welche Zeitschlitze benutzt werden können, zwischen den Knoten und der Basisstation erfolgt, und daß die Knoten, die sychron kommunizieren wollen, eine Verbindung zu der Basisstation anfragen durch Anfordern eines schaltungs-geschalteten Links über die auf der MAC-Ebene in DECT-definierten Dienste, wobei sie jedoch anzeigen, daß die angeforderten Zeitschlitze für Privatgebrauch sind.

2. Zugriffsmethode nach Anspruch 1,
**dadurch gekennzeichnet, daß** Untergruppen bei allen Knoten erstellt werden, wobei diese Untergruppen sämtlich die gleiche Größe und den gleichen Inhalt haben.

3. Zugriffsmethode nach Anspruch 2,
**dadurch gekennzeichnet, daß** die Untergruppen durch Zufallsgeneratoren (10) an den jeweiligen Knoten (5, 6, 7, 8) erstellt werden unter Verwendung der gleichen oder entsprechenden Ursprünge (Kerne) wie die Zufallsgeneratoren der anderen Knoten beim Bestimmen der Inhalte der Untergruppe.

4. Zugriffsmethode nach einem der vorangehenden Ansprüche,
**dadurch gekennzeichnet, daß** die Wahl des gemeinsamen Satzes von Zeitschlitzen auf den Kanalwählvorgang von DECT folgt und dynamisch angepaßt wird gemäß der Verkehrssituation sowohl des eigenen Verkehrs als auch des umgebenden Verkehrs.

5. Zugriffsmethode nach Anspruch 3,
**dadurch gekennzeichnet ,daß** die Basisstation Information verteilt über gemeinsame Kerne/Ursprünge, die für die Zufallsgeneratoren nötig sind, und über den Parameter N oder das Verhältnis N/n.

6. Zugriffsmethode nach Anspruch 5,
**dadurch gekennzeichnet, daß** die Basisstation die Information über ein Funkstrahlpaket verteilt.

7. Zugriffsmethode nach einem der vorangehenden Ansprüche,
**dadurch gekennzeichnet, daß** das Systempaket orientiert ist dadurch, daß das Frequenzspektrum nur während der stattfindenden Kommunikation verwendbar/reserviert ist.

8. Funkgestütztes LAN-System mit einer Anzahl von Knoten (5, 6, 7, 8), von, zu und zwischen denen Datenverkehr durchgeführt wird mittels eines Satzes von Zeitschlitzen für die jeweils beteiligten Knoten, wobei die Wahrscheinlichkeit, daß nur ein Knoten mit einem Zeitschlitz verbunden ist, d.h. daß Kollisionen mit anderen Knoten vermieden werden, mittels eines Urnenschemas bestimmt wird, wobei das LAN-System auf der DECT-Norm beruht und umfaßt:
Mittel zum Abschätzen der Gesamtzahl von Knoten N;
Mittel zum Abschätzen der Anzahl von Knoten n, die zum Zeitpunkt t etwas zu versenden haben; und
Mittel für das zufällige Erstellen einer Untergruppe von Knoten, die während eines Zeitschlitzes t+1 die Erlaubnis zum Senden haben, wobei die Größe k der Unergruppe geschätzt wird als k=N/n, aufgerundet auf die nächsthöhere ganze Zahl, wobei die Knoten (5, 6, 7, 8) eingerichtet sind, um einen gemeinsamen Satz von Zeitschlitzen auszuhandeln, der zur Bildung eines gemeinsamen Funkkanals dient,
**dadurch gekennzeichnet, daß** die Knoten, die asynchron kommunizieren wollen, so eingerichtet sind, daß sie eine Verbindung zu einer Basisstation anfragen durch Anfordern eines schaltungs-geschalteten Links über die auf der MAC-Ebene in DECT-definierten Dienste, wobei die Basisstation so eingerichtet ist, daß sie jedem Knoten, der asynchron kommunizieren will, die dem gemeinsamen Funkkanal entsprechenden Zeitschlitze zuweist, und wobei das Aushandeln, welche Zeitschlitze verwendet werden können, zwischen den Knoten und der Basisstation erfolgt, und daß die Knoten, die synchron kommunizieren wollen, so eingerichtet sind, daß sie eine Verbindung zu der Basisstation anfragen durch Anfordern eines schaltungs-geschalteten Links über die auf der MAC-Ebene in DECT-definierten Dienste, wobei sie jedoch anzeigen, daß die angeforderten Zeitschlitze für Privatgebrauch sind.

9. LAN-System nach Anspruch 8,
**dadurch gekennzeichnet, daß** die Untergruppen bei allen Knoten gebildet werden, wobei die Untergruppen sämtlich die gleiche Größe und den gleichen Inhalt haben.

10. LAN-System nach Anspruch 9,
**dadurch gekennzeichnet, daß** die jeweiligen Knoten (5, 6, 7, 8) Zufallsgeneratoren (10) umfassen, die die Untergruppen bilden und dieselben oder entsprechende Ursprünge (Kerne) wie die Zufallsgeneratoren der anderen Knoten beim Bestimmen der Inhalte der Untergruppe verwenden.

11. LAN-System nach einem der Ansprüche 8 bis 10,
**dadurch gekennzeichnet, daß** die Wahl des gemeinsamen Satzes von Zeitschlitzen auf den Kanalwählvorgang von DECT folgt und dynamisch angepaßt ist entsprechend der Verkehrssituation sowohl des eigenen Verkehrs als auch des umgebenden Vekehrs.

12. LAN-System nach Anspruch 10,
**dadurch gekennzeichnet, daß** die Basisstation so eingerichtet ist, daß sie Information über gemeinsame Kerne/Ursprünge, die von den Zufallsgeneratoren benötigt werden, und über den Parameter N oder das Verhältnis N/n verteilt.

13. LAN-System nach Anspruch 12,
**dadurch gekennzeichnet, daß** die Basisstation so eingerichtet ist, daß sie die Information über ein Funkstrahlpaket verteilt.

14. LAN-System nach einem der Ansprüche 8 bis 13,
**dadurch gekennzeichnet, daß** das System paketorientiert ist, dadurch, daß das Frequenzspektrum nur bei stattfindender Kommunikation verwendbar/reserviert ist.

## Revendications

1. Procédé d'accès dans un système de réseau de zone locale à base radio comprenant un certain nombre de noeuds (5, 6, 7, 8) à partir desquels, en direction desquels et entre lesquels un trafic de données est établi au moyen d'un groupe de secteurs de temps pour les noeuds respectifs impliqués, la probabilité qu'un seul noeud soit connecté à un secteur de temps, c'est-à-dire tel que des collisions avec d'autres noeuds soient évitées, étant déterminée au moyen d'une méthode d'urne, et selon lequel le système de réseau de zone locale est basé sur le standard des DECT et le procédé d'accès est mis en oeuvre sur le niveau de commande d'accès moyen et comprend les opérations suivantes consistant :
- en ce que les noeuds (5, 6, 7, 8) négocient un groupe commun de secteurs de temps à utiliser pour former un canal radio commun,
- à estimer le nombre total de noeuds N,
- à estimer le nombre de noeuds n qui ont quelque chose à émettre à l'instant t,
- à créer d'une manière aléatoire un sous-groupe desdits noeuds auquel il est permis d'émettre pendant un secteur de temps t + 1, la taille k dudit sous-groupe étant estimée sous la forme k = N/n arrondi au nombre entier immédiatement supérieur,
**caractérisé en ce que** les noeuds qui souhaitent communiquer d'une manière asynchrone requièrent une connexion à une station de base en requérant une liaison à sélection automatique de ligne par l'intermédiaire des services définis sur le niveau de commande d'accès moyen en DECT, la station de base assignant à chaque noeud souhaitant communiquer d'une manière asynchrone les secteurs de temps correspondant au canal radio commun, et la négociation concernant les secteurs de temps qui peuvent être utilisés ayant lieu entre les noeuds et la station de base, et **en ce que** les noeuds qui souhaitent communiquer d'une manière synchrone requièrent une connexion à la station de base en requérant une liaison à sélection automatique de ligne par l'intermédiaire des services définis sur le niveau de commande d'accès moyen en DECT, mais indiquent que les secteurs de temps requis sont à usage privé.

2. Procédé d'accès suivant la revendication 1, **caractérisé en ce que** des sous-groupes sont créés à tous les noeuds, lesquels sous-groupes ont tous la même taille et le même contenu.

3. Procédé d'accès suivant la revendication 2, **caractérisé en ce que** les sous-groupes sont créés au moyen de générateurs aléatoires (10) aux noeuds (5, 6, 7, 8) respectifs employant les mêmes origines (noyaux) que les générateurs aléatoires des autres noeuds ou des origines (noyaux) correspondantes dans la détermination du contenu du sous-groupe.

4. Procédé d'accès suivant l'une quelconque des précédentes revendications, **caractérisé en ce que** le choix du groupe commun de secteurs de temps suit la procédure de sélection de canal des DECT et est adapté d'une manière dynamique en fonction de la situation de trafic à la fois de son propre trafic et du trafic environnant.

5. Procédé d'accès suivant la revendication 3, **caractérisé en ce que** la station de base distribue des informations concernant des noyaux/ori-gines communs qui sont nécessaires pour les générateurs aléatoires et concernant le paramètre N ou le rapport N/n.

6. Procédé d'accès suivant la revendication 5, **caractérisé en ce que** la station de base distribue les informations par l'intermédiaire d'un paquet de signaux d'erreur.

7. Procédé d'accès suivant l'une quelconque des précédentes revendications, **caractérisé en ce que** le système est à orientation par paquets dans la mesure où le spectre de fréquences est utilisable/réservé uniquement lorsqu'une communication se présente.

8. Procédé d'accès dans un système de réseau de zone locale à base radio comprenant un certain nombre de noeuds (5, 6, 7, 8) à partir desquels, en direction desquels et entre lesquels un trafic de données est établi au moyen d'un groupe de secteurs de temps pour les noeuds respectifs impliqués, la probabilité qu'un seul noeud soit connecté à un secteur de temps, c'est-à-dire tel que des collisions avec d'autres noeuds soient évitées, étant déterminée au moyen d'une méthode d'urne, dans lequel le système de réseau de zone locale est basé sur le standard des DECT et comprenant :
- des moyens servant à estimer le nombre total de noeuds N,
- des moyens servant à estimer le nombre de noeuds n qui ont quelque chose à émettre à l'instant t, et
- des moyens servant à créer d'une manière aléatoire un sous-groupe desdits noeuds auquel il est permis d'émettre pendant un secteur de temps t + 1, la taille k dudit sous-groupe étant estimée sous la forme k = N/n arrondi au nombre entier immédiatement supérieur, les noeuds (5, 6, 7, 8) étant adaptés pour négocier un groupe commun de secteurs de temps à utiliser pour former un canal radio commun,
**caractérisé en ce que** les noeuds qui souhaitent communiquer d'une manière asynchrone sont adaptés pour requérir une connexion à une station de base en requérant une liaison à sélection automatique de ligne par l'intermédiaire des services définis sur le niveau de commande d'accès moyen en DECT, la station de base étant adaptée pour assigner à chaque noeud souhaitant communiquer d'une manière asynchrone les secteurs de temps correspondant au canal radio commun, et la négociation concernant les secteurs de temps qui peuvent être utilisés ayant lieu entre les noeuds et la station de base, et **en ce que** les noeuds qui souhaitent communiquer d'une manière synchrone sont adaptés pour requérir une connexion à la station de base en requérant une liaison à sélection automatique de ligne par l'intermédiaire des services définis sur le niveau de commande d'accès moyen en DECT, mais indiquent que les secteurs de temps requis sont à usage privé.

9. Système de réseau de zone locale suivant la revendication 8, **caractérisé en ce que** des sous-groupes sont créés à tous les noeuds, lesquels sous-groupes ont tous la même taille et le même contenu.

10. Système de réseau de zone locale suivant la revendication 9, **caractérisé en ce que** les noeuds respectifs (5, 6, 7, 8) comportent des générateurs aléatoires (10) créant les sous-groupes et employant les mêmes origines (noyaux) que les générateurs aléatoires des autres noeuds ou des origines (noyaux) correspondantes dans la détermination du contenu du sous-groupe.

11. Système de réseau de zone locale suivant l'une quelconque des revendications 8 à 10, **caractérisé en ce que** le choix du groupe commun de secteurs de temps suit la procédure de sélection de canal des DECT et est adapté d'une manière dynamique en fonction de la situation de trafic à la fois de son propre trafic et du trafic environnant.

12. Système de réseau de zone locale suivant la revendication 10, **caractérisé en ce que** la station de base est adaptée pour distribuer des informations concernant des noyaux/ori-gines communs qui sont nécessaires pour les générateurs aléatoires et concernant le paramètre N ou le rapport N/n.

13. Système de réseau de zone locale suivant la revendication 12, **caractérisé en ce que** la station de base est adaptée pour distribuer les informations par l'intermédiaire d'un paquet de signaux d'erreur.

14. Système de réseau de zone locale suivant l'une quelconque des revendications 8 à 13, **caractérisé en ce que** le système est à orientation par paquets dans la mesure où le spectre de fréquences est utilisable/réservé uniquement lorsqu'une communication se présente.
